# EUROPEAN PATENT SPECIFICATION

(11) **EP 4 546 873 B1**
(45) Date of publication and mention of the grant of the patent: **21.10.2026**
(21) Application number: 23831141.9
(22) Date of filing: 15.06.2023
(51) Int. Cl.: H04W 48/04, H04M 1/00, H04M 11/00, H04W 4/02, H04W 4/48, H04W 16/14, H04W 64/00, H04W 84/10, H04W 88/06, H04L 67/12, H04W 4/021, H04W 4/70, H04W 4/80, H04W 76/14

(54) **SHORT-RANGE WIRELESS COMMUNICATION SYSTEM**
DRAHTLOSES KOMMUNIKATIONSSYSTEM MIT KURZER REICHWEITE
SYSTÈME DE COMMUNICATION SANS FIL À COURTE PORTÉE

(30) Priority: 27.06.2022 JP 2022102874
(43) Date of publication of application: 30.04.2025
(73) Proprietor: Hitachi Construction Machinery Co., Ltd., Tokyo 110-0015 (JP)
(72) Inventor: NOBE Keita, Tsuchiura-shi, Ibaraki 300-0013 (JP); SHIBAMORI Kazuhiro, Tsuchiura-shi, Ibaraki 300-0013 (JP); MIZUNOYA Hajime, Tsuchiura-shi, Ibaraki 300-0013 (JP)
(74) Representative: MERH-IP Matias Erny Reichl Hoffmann Patentanwälte PartG mbB
(86) International application number: PCT/JP2023/022313
(87) International publication number: WO 2024/004693

(56) References cited:
- WO-A1-2013/111282
- WO-A1-2016/135982
- WO-A1-2021/111677
- JP-A- 2002 209 246
- JP-A- 2003 511 952
- JP-A- 2008 121 203
- JP-A- 2010 278 558
- JP-A- 2012 034 326
- JP-A- 2020 129 218
- US-A1- 2021 345 094

## Description

### Technical Field

The present invention relates to a short-range wireless communication system that connects a portable communication terminal to an in-machine communication terminal via short-range wireless communication.

### Background Art

Because of development of IoT equipment, a large number of pieces of wireless communication equipment exist at a construction site. Many pieces of equipment among them use short-range wireless communication that can be used without a license and share a communication band. Therefore, the lowering of the communication performance attributed to mutual radio wave interference is of concern.

Meanwhile, it is required to implement, in a construction machine, a machine body diagnosis function through connection of a portable communication terminal such as a smartphone to the machine body via short-range wireless communication. However, the influence of radio wave interference on existing pieces of equipment needs to be suppressed to the minimum. In addition, the communication band of a short-range wireless function is often limited depending on communication regulations in each country, and prohibition of use itself of short-range wireless communication is often required depending on the circumstances. Because of such a background, means is required that optionally performs switchover of the operation state of the short-range wireless communication on the machine body side by using a wireless measure while checking compliance with laws and regulations.

As a technique relating to the switchover by use of a wireless measure, for example, an electronic key of an automobile is cited. According to Patent Document 1, the following function is implemented. An electronic key transmits ID information of the electronic key to a machine body when receiving an activation signal from the machine body side, and the machine body side releases key lock when the ID information is correct ID information.

Furthermore, since compliance with laws and regulations in each country is required in the case of enabling (turning on) short-range wireless communication, Patent document 2 has proposed the following method. By comparing communication regulation data (data map having divisions including regions in which wireless communication is permitted and regions in which wireless communication is not permitted) with the current position of a machine body, when the machine body is located in the region in which communication is not regulated, wireless communication is permitted, and when the machine body is located in the region in which communication is regulated, wireless communication is prohibited.

### Prior Art Document

### Patent Documents

Patent Document 1: Japanese Patent No. 5365979
Patent Document 2: JP-2008-121203-A

Further relevant prior art can be found in WO 2021/111677 A1 and US 2021/345094 A1.

### Summary of the Invention

### Problem to be Solved by the Invention

The technique of Patent Document 1 implements the function of releasing key lock by communication between the machine body and the electronic key between which pairing has been executed in advance. However, laws and regulations are not considered. Therefore, there is a possibility that short-range wireless communication is used in a region in which communication is regulated.

Furthermore, in the method of Patent Document 2, the communication regulation data needs to be stored on the machine body side. Therefore, if the communication regulation data has not been updated to the latest data, there is a possibility that wireless communication is accidentally permitted in a region in which communication regulations have been newly enforced.

The present invention is made in view of the above-described problem, and an object thereof is to provide a short-range wireless communication system that can connect a portable communication terminal to an in-machine communication terminal via short-range wireless communication while complying with the latest laws and regulations.

### Means for Solving the Problem

In order to achieve the above-described object, the present invention provides a short-range wireless communication system including an in-machine communication terminal mounted in a machine body and a portable communication terminal capable of connecting to the in-machine communication terminal by a short-range wireless communication line. The short-range wireless communication system includes a management server connected to the in-machine communication terminal and the portable communication terminal through a communication network. The portable communication terminal transmits a wireless communication turn-on request to the management server when connecting to the in-machine communication terminal by the short-range wireless communication line. The management server includes a storage section that acquires and stores information on the latest laws and regulations, and is configured to determine whether the current position of the machine body received from the in-machine communication terminal is included in a region in which short-range wireless communication is permitted on the basis of the information on the latest laws and regulations stored in the storage section when receiving the wireless communication turn-on request. The management server transmits the short-range wireless communication turn-on request to the in-machine communication terminal when determining that the current position is included in a region in which the short-range wireless communication is permitted, and keeps the short-range wireless communication turn-on request from being transmitted to the in-machine communication terminal when determining that the current position is not included in a region in which the short-range wireless communication is permitted.

According to the present invention configured as above, the wireless communication turn-on request transmitted by the portable communication terminal is received by the in-machine communication terminal via the management server only when the management server determines that the machine body exists in a region in which the short-range wireless communication is permitted. This enables connection via the short-range wireless communication between the portable communication terminal and the in-machine communication terminal while complying with the latest laws and regulations.

### Advantages of the Invention

According to the short-range wireless communication system in accordance with the present invention, it becomes possible to connect the portable communication terminal to the in-machine communication terminal via the short-range wireless communication while complying with the latest laws and regulations.

### Brief Description of the Drawings

FIG. 1 is a diagram illustrating the configuration of a short-range wireless communication system in embodiments of the present invention.
FIG. 2 is a functional block diagram of the short-range wireless communication system in the embodiments of the present invention.
FIG. 3 is a flowchart illustrating processing of the short-range wireless communication system in a first embodiment of the present invention.
FIG. 4 is a flowchart illustrating processing of the short-range wireless communication system in a second embodiment of the present invention.

### Modes for Carrying Out the Invention

Embodiments of the present invention will be described below with use of the drawings. Note that, in the respective diagrams, an equivalent element is given the same numeral and overlapping description is omitted as appropriate.

### [First Embodiment]

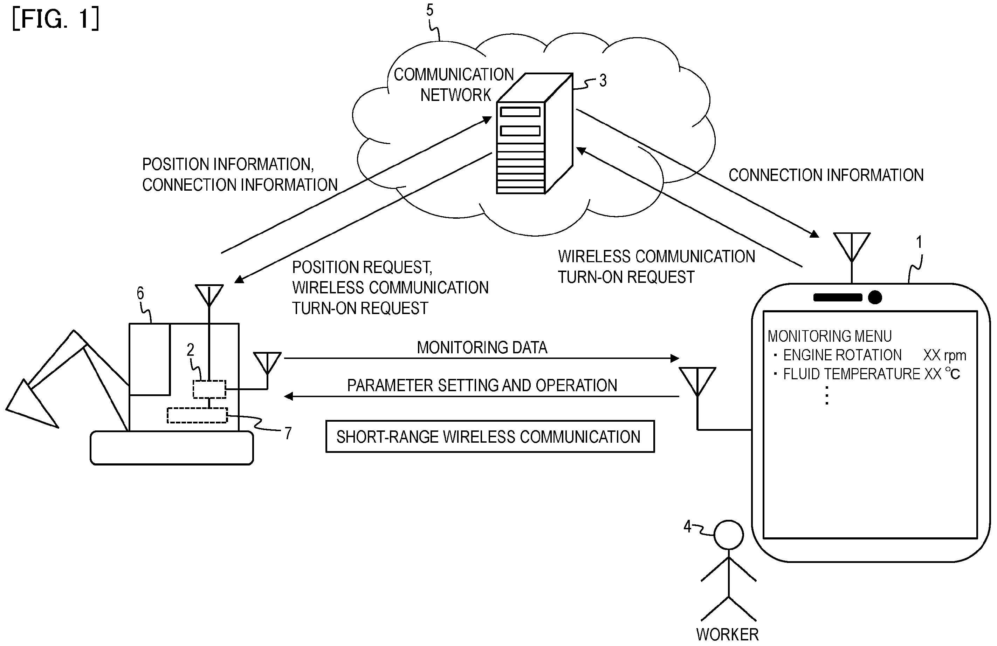

FIG. 1 is a diagram illustrating the configuration of a short-range communication system in a first embodiment of the present invention. The short-range wireless communication system in the first embodiment includes a portable communication terminal 1, an in-machine communication terminal 2, and a management server 3.

For example, the portable communication terminal 1 includes a smartphone or tablet carried by a worker 4. The portable communication terminal 1 can communicate with the in-machine communication terminal 2 through short-range wireless communication, and communicate with the management server 3 through a communication network 5 mainly including a cellular communication line or the Internet. The in-machine communication terminal 2 is mounted in a machine body 6, is connected to an in-machine network (not illustrated) mainly by wired connection, and is connected to a machine body system 7 through the in-machine network. The in-machine communication terminal 2 can communicate with the management server 3 through the communication network 5. Although a hydraulic excavator is illustrated as an example of the machine body 6 in FIG. 1, the kind of machine body 6 is not particularly limited.

During normal operation of the machine body 6, the short-range wireless communication of the in-machine communication terminal 2 is in the off- (disabled) state. When connecting to the in-machine communication terminal 2 by the short-range wireless communication, the portable communication terminal 1 transmits a wireless communication turn-on request to the management server 3 via the communication network 5. The management server 3 determines whether there is no problem even when the wireless communication turn-on request is transmitted to the in-machine communication terminal 2 on the basis of position information of the machine body 6 or the like. The in-machine communication terminal 2 that has received the wireless communication turn-on request sets the short-range wireless communication to the on- (enabled) state, and transmits the information (connection information) necessary for communication connection with the in-machine communication terminal 2 to the portable communication terminal 1 via the management server 3. The portable communication terminal 1 connects to the in-machine communication terminal 2 via the short-range wireless communication, and receives monitoring data from the machine body 6. The worker 4 executes maintenance work or the like by using the monitoring data received from the machine body 6 as a reference. It is also possible for the portable communication terminal 1 to execute parameter setting and operation for the in-machine communication terminal 2 and the machine body system 7. Because the portable communication terminal 1 is connected to the in-machine communication terminal 2 in a wireless manner, wired connection to a communication port in the cab is unnecessary and the worker 4 can execute work without caring about wiring even at a place outside the cab, such as an engine room.

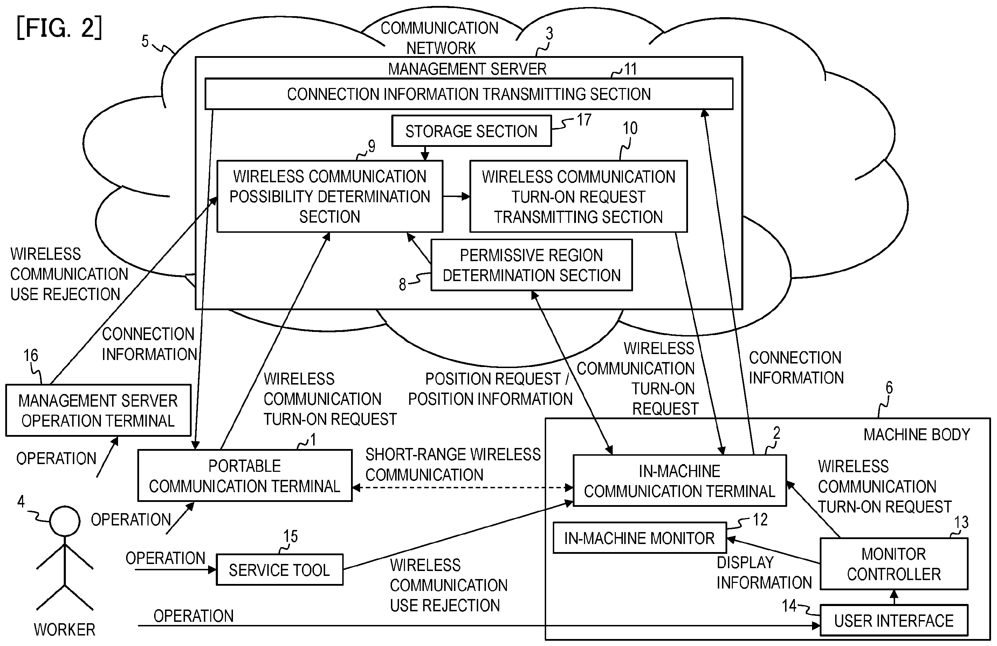

FIG. 2 is a functional block diagram of the short-range wireless communication system. The management server 3 has a storage section 17 that acquires and stores information on the latest laws and regulations, a permissive region determination section 8 that determines the region (operation region) in which the machine body 6 is operating on the basis of the current position of the machine body 6 received from the in-machine communication terminal 2, a wireless communication possibility determination section 9 that collates the operation region with a communication permissive country list based on the latest laws and regulations of each country and determines whether communication is possible in response to the wireless communication turn-on request from the portable communication terminal 1, a wireless communication turn-on request transmitting section 10 that transmits the wireless communication turn-on request to the in-machine communication terminal 2, and a connection information transmitting section 11 that transmits the connection information to the portable communication terminal 1.

The machine body 6 is equipped with an in-machine monitor 12, a monitor controller 13 that controls the in-machine monitor 12, and a user interface 14 that can input an instruction to the monitor controller 13 in response to operation by the worker 4, besides the in-machine communication terminal 2. Functions of these pieces of equipment will be described later. Furthermore, a service tool 15 and a management server operation terminal 16 will be described in an embodiment to be described later.

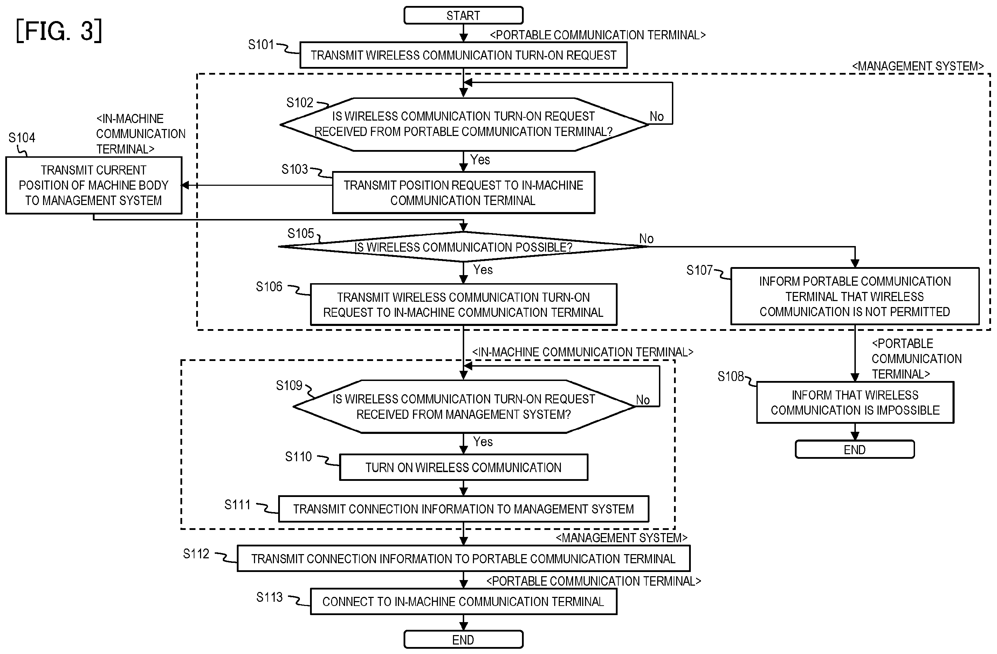

FIG. 3 is a flowchart illustrating processing of the short-range wireless communication system. The respective steps will be sequentially described below.

First, the worker 4 inputs, to the portable communication terminal 1, information that allows identification of the machine body 6 as the destination of connection via short-range wireless communication, and transmits the wireless communication turn-on request to the management server 3 through the communication network 5 (step S101). At this time, information unique to the portable communication terminal 1 (for example, MAC address) may be transmitted together.

The management server 3 determines whether the wireless communication turn-on request from the portable communication terminal 1 has been received or not (step S102). When receiving the wireless communication turn-on request, the management server 3 transmits a position request to the in-machine communication terminal 2 through the communication network 5 (step S103). The in-machine communication terminal 2 that has received the position request transmits the current position of the machine body 6 to the management server 3 (step S104).

The management server 3 that has acquired the current position of the machine body 6 determines whether the machine body 6 exists or not in a region in which the short-range wireless communication is permitted (whether wireless communication is possible or not) (step S105). Note that, instead of the step S103, the management server 3 may inquire of the communication carrier used by the in-machine communication terminal 2 about the current position of the machine body 6 or estimate the current position of the machine body 6 from customer information registered in the management server 3.

The management server 3 that has determined that the short-range wireless communication is possible transmits the wireless communication turn-on request to the in-machine communication terminal 2 (step S106). Here, when having acquired the information unique to the portable communication terminal 1, the management server 3 may transmit the information to the in-machine communication terminal 2 together. This enables permission for only the specific portable communication terminal 1, which requests communication connection, to establish the communication connection.

The management server 3 that has determined that the short-range wireless communication is impossible informs the portable communication terminal 1 that the short-range wireless communication is not permitted (step S107). The portable communication terminal 1 informed that the short-range wireless communication is not permitted displays information indicating that use of the short-range wireless communication is impossible on a terminal screen to inform the worker 4 (step S108).

The in-machine communication terminal 2 determines whether the wireless communication turn-on request has been received from the management server 3 (step S109). When receiving the wireless communication turn-on request, the in-machine communication terminal 2 turns on (enables) the short-range wireless communication (step S110), and transmits the connection information to the management server 3 (step S111). The connection information mentioned here refers to, for example, an ID and a password, or the like.

The management server 3 that has received the connection information from the in-machine communication terminal 2 transmits this connection information to the portable communication terminal 1 (step S112). The portable communication terminal 1 that has received the connection information connects to the in-machine communication terminal 2 by using the short-range wireless communication (step S113). When having received the unique information of the portable communication terminal 1 from the management server 3, the in-machine communication terminal 2 compares this unique information with the unique information of the portable communication terminal 1 that attempts connection, and permits the connection only when both correspond with each other.

Note that, depending on the country, part of the bands of the short-range wireless communication is prohibited from being used in some cases in order to prevent interference with a line for military use, a weather satellite, or the like. Moreover, in the other countries, there is a demand to enable communication by use of as many bands as possible because the communication performance becomes high when the number of bands that can be used is larger. Thus, the configuration that permits/prohibits use of the short-range wireless communication itself can be read as, for example, the configuration that permits/prohibits use of a specific band.

Furthermore, when the machine body 6 as the subject is operating near a national boarder, it is conceivable that the operation region is erroneously determined with only information of a satellite positioning system such as the GPS. Thus, the following configuration may be employed. When the machine body 6 is operating within a certain distance from a national boarder, a screen to be used to inquire whether the operation region determined by the management server 3 is correct or not is displayed on the in-machine monitor 12**.** When it is confirmed, by the worker 4, that the operation region is correct, wireless communication is switched on. When it is not confirmed that the operation region is correct, the actual operation region is transmitted to the management server 3, and the management server 3 is caused to determine whether wireless communication is possible or not in this operation region. Alternatively, the configuration may be made in such a manner that wireless communication is not turned on when the machine body 6 is operating within a certain distance from a border line.

Moreover, there is a demand to turn on the short-range wireless communication only when it is necessary. Therefore, a configuration in which the short-range wireless communication is turned off upon disconnection of communication is also conceivable. However, with such a configuration, the convenience of functions using the short-range wireless communication becomes low because a long time is required for reconnection every time communication is disconnected due to the radio wave condition or the like. Therefore, the configuration may be made in such a manner that the on-state of wireless communication is kept for a sufficient time to use the function using the short-range wireless communication, such as, for example, a period during which the key switch of the machine body 6 is in the on-state or a period until the date changes. Furthermore, in view of the risk of crossing a border line in the state in which the short-range wireless communication is turned on, the short-range wireless communication may be switched off when the machine body 6 has moved by a certain distance.

In the first embodiment, in the short-range wireless communication system including the in-machine communication terminal 2 mounted in the machine body 6 and the portable communication terminal 1 that can connect to the in-machine communication terminal 2 by a short-range wireless communication line, the management server 3 connected to the in-machine communication terminal 2 and the portable communication terminal 1 through the communication network 5 is included. The portable communication terminal 1 transmits the wireless communication turn-on request to the management server 3 when connecting to the in-machine communication terminal 2 by the short-range wireless communication line. The management server 3 includes the storage section 17 that acquires and stores the information on the latest laws and regulations, and determines whether the current position of the machine body 6 received from the in-machine communication terminal 2 is included in a region in which short-range wireless communication is permitted, on the basis of the information on the latest laws and regulations stored in the storage section 17 when receiving the wireless communication turn-on request from the portable communication terminal 1. The management server 3 transmits the wireless communication turn-on request to the in-machine communication terminal 2 when determining that the current position is included in a region in which the short-range wireless communication is permitted, and keeps the wireless communication turn-on request from being transmitted to the in-machine communication terminal 2 when determining that the current position is not included in a region in which the short-range wireless communication is permitted.

According to the first embodiment configured as above, the wireless communication turn-on request transmitted by the portable communication terminal 1 is received by the in-machine communication terminal 2 via the management server 3 only when the management server 3 determines that the machine body 6 exists in a region in which the short-range wireless communication is permitted. This enables connection via the short-range wireless communication between the portable communication terminal 1 and the in-machine communication terminal 2 while complying with the latest laws and regulations.

Furthermore, the in-machine communication terminal 2 in the first embodiment turns off the short-range wireless communication when the machine body 6 has moved by a certain distance after the short-range wireless communication has been turned on or when a certain time has elapsed after the short-range wireless communication has been turned on. This improves the convenience of the short-range wireless communication, and can prevent the machine body 6 from entering a region in which the short-range wireless communication is not permitted in the state in which the short-range wireless communication is turned on.

### [Second Embodiment]

A second embodiment of the present invention will be described with focus on differences from the first embodiment. In the first embodiment, when whether short-range wireless communication is possible or not is determined, the position request is transmitted from the management server 3 to the in-machine communication terminal 2, and the in-machine communication terminal 2 that has received the position request transmits the current position of the machine body 6 to the management server 3. Thus, the processing time until the short-range wireless communication is turned on and the communication cost in the communication network 5 increase. The second embodiment is made in view of this point.

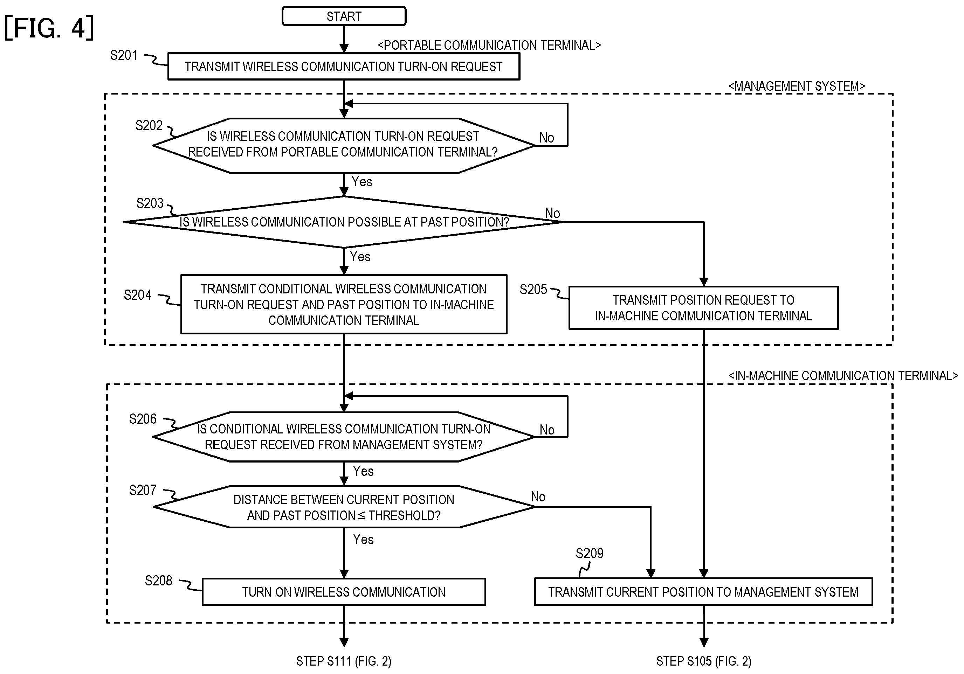

The in-machine communication terminal 2 periodically transmits position information of the machine body 6 to the management server 3. In the second embodiment, determination of whether wireless communication is possible or not is assisted by using this periodically transmitted position information. This procedure will be described by using FIG. 4.

FIG. 4 is a flowchart illustrating processing of the short-range wireless communication system in the second embodiment. The respective steps will be sequentially described below.

First, the worker 4 inputs, to the portable communication terminal 1, information that allows identification of the machine body 6 as the destination of connection via short-range wireless communication, and transmits the wireless communication turn-on request to the management server 3 through the communication network 5 (step S201).

The management server 3 determines whether the wireless communication turn-on request from the portable communication terminal 1 has been received or not (step S202). When receiving the wireless communication turn-on request, the management server 3 determines whether wireless communication is possible at the position (past position) indicated by the position information received last from the in-machine communication terminal 2 (step S203). When determining that wireless communication is possible, the management server 3 transmits a conditional wireless communication turn-on request and the past position to the in-machine communication terminal 2 (step S204). When determining that wireless communication is impossible, the management server 3 transmits a position request to the in-machine communication terminal 2 (step S205). This processing is the same as the step S103 in FIG. 3.

The in-machine communication terminal 2 determines whether the conditional wireless communication turn-on request has been received from the management server 3 (step S206). The in-machine communication terminal 2 that has received the conditional wireless communication turn-on request determines whether the movement distance from the past position received from the management server 3 to the current position is equal to or shorter than a predetermined threshold (step S207), and turns on the short-range wireless communication when the movement distance is equal to or shorter than the predetermined threshold (step S208). The threshold mentioned here is set to, for example, a distance with which it can be deemed that the machine body 6 has not moved from the inside of the operation site of the past position. The processing subsequent to the step S208 is the same as the processing of the step S111 illustrated in FIG. 3 and the subsequent steps.

When the movement distance from the past position to the current position exceeds the threshold, it is assumed that the machine body 6 has moved to another site or been transported to the outside of the country. Therefore, the in-machine communication terminal 2 transmits the current position to the management server 3 (step S209), and whether wireless communication is possible or not is determined again. The processing subsequent to the step S209 is the same as the processing of the step S105 illustrated in FIG. 3 and the subsequent steps.

The in-machine communication terminal 2 in the second embodiment periodically transmits the position information of the machine body 6 to the management server 3. When receiving the wireless communication turn-on request from the portable communication terminal 1, the management server 3 transmits past position information that is the position information of the machine body 6 received last from the in-machine communication terminal 2 to the in-machine communication terminal 2 in the case where the past position information is included in a region in which short-range wireless communication is permitted. The in-machine communication terminal 2 turns on the short-range wireless communication when the movement distance from the past position information to the current position information of the machine body 6 is equal to or shorter than the predetermined threshold, and transmits the current position information to the management server 3 without turning on the short-range wireless communication when the movement distance exceeds the threshold.

According to the second embodiment configured as above, transmission of the position request from the management server 3 to the in-machine communication terminal 2 and transmission of the position information from the in-machine communication terminal 2 to the management server 3 are omitted as long as the machine body 6 is operating in the vicinity of the past position at which the short-range wireless communication has been permitted (in the same counter, the same site, or the like). As a result, it becomes possible to suppress the processing time until the short-range wireless communication is turned on and the communication cost in the communication network 5.

### [Third Embodiment]

A third embodiment of the present invention will be described with focus on differences from the first embodiment. In the configuration of the first embodiment, short-range wireless communication is set to the enabled (on-) state through the communication network 5. However, communication between the portable communication terminal 1 or the in-machine communication terminal 2 and the communication network 5 is often impossible (it is often impossible to establish a connection with a base station) because of a physical condition such as the operation state of the machine body 6. In this case, it becomes impossible to set the short-range wireless communication to the enabled (on-) state. Thus, backup means to manually set the short-range wireless communication to the enabled (on-) state is required. The third embodiment is made in view of this request.

The monitor controller 13 in the third embodiment can display an operation menu of "manual turning-on of wireless communication" on the in-machine monitor 12 in response to operation on the in-machine monitor 12 by the worker 4. When the worker 4 selects the operation menu, the in-machine communication terminal 2 sets short-range wireless communication to the on-state and displays connection information on the in-machine monitor 12**.** The connection information in this case is displayed by, for example, an image code (barcode or two-dimensional code) that can be read by a camera of the portable communication terminal 1.

In the third embodiment, in which wireless communication is allowed to be manually turned on, the worker 4 needs to obtain the latest communication regulations condition from the management server 3 in advance and be careful not to turn on the short-range wireless communication in a communication-prohibited country. In order to check whether manual turning-on of wireless communication complies with the latest laws and regulations in an after-the-fact manner, when wireless communication is manually turned on, the in-machine communication terminal 2 may record this setting of manual turning-on and information on the position at which the wireless communication has been turned on, and notify the management server 3 about those after the communication network 5 becomes usable.

Moreover, the configuration may be made in such a manner that, when the in-machine communication terminal 2 has sensed that it is impossible to use the communication network 5 (for example, outside the communication range), the monitor controller 13 displays the operation menu of "manual turning-on of wireless communication" on the in-machine monitor 12 and deletes this operation menu after the communication network 5 becomes usable again.

The short-range wireless communication system in the third embodiment includes the in-machine monitor 12 mounted in the machine body **6.** The in-machine monitor 12 displays the operation menu for manually turning on the short-range wireless communication when the in-machine communication terminal 2 has sensed that it is impossible to use the communication network **5.**

According to the third embodiment configured as above, the worker 4 can promptly manually turn on the short-range wireless communication when it is impossible for the in-machine communication terminal 2 to use the communication network 5.

### [Fourth Embodiment]

A fourth embodiment of the present invention will be described with focus on differences from the third embodiment. In the third embodiment, it is possible for the worker 4 to manually turn on wireless communication. Therefore, there is a possibility that short-range wireless communication is used in violation of the latest laws and regulations due to carelessness of the worker 4**.** The fourth embodiment is made in view of this point.

The in-machine communication terminal 2 in the fourth embodiment has an operation mode in which manual turning-on of wireless communication by the worker 4 is prohibited. That is, the in-machine communication terminal 2 has three operation modes: "wireless communication enabled mode" that is an operation mode in which short-range wireless communication is set to the on- (enabled) state; a "wireless communication stopped mode" that is an operation mode in which the short-range wireless communication is set to the off- (disabled) state and can be set to the on- (enabled) state by the wireless communication turn-on request; and a "wireless communication prohibited mode" that is an operation mode in which the short-range wireless communication is set to the off- (disabled) state and switchover to the on- (enabled) state is not permitted.

Switchover from the wireless communication stopped mode to the wireless communication enabled mode is as described in the first embodiment. Switchover from the wireless communication stopped mode to the wireless communication prohibited mode is executed by an operation menu on the in-machine monitor 12 or from the portable communication terminal 1 through the communication network 5. Switchover from the wireless communication enabled mode to the wireless communication prohibited mode is executed by an operation menu on the in-machine monitor 12 or from the portable communication terminal 1 through the communication network 5 or the short-range wireless communication. Switchover from the wireless communication prohibited mode to the wireless communication stopped mode or the wireless communication enabled mode is not permitted in the cases other than initialization to factory settings and a command for design.

Note that, when the in-machine communication terminal 2 receives the wireless communication turn-on request in the wireless communication prohibited mode, the in-machine communication terminal 2 may inform the portable communication terminal 1 via the management server 3 that it is impossible to turn on the short-range wireless communication. Furthermore, when the management server 3 has information on prohibition of wireless communication, the management server 3 that has received the wireless communication turn-on request from the portable communication terminal 1 informs the portable communication terminal 1 that the short-range wireless communication is impossible, without determining whether wireless communication is possible or not. Moreover, the management server 3 may be caused to have information relating to whether to prohibit the short-range wireless communication of the specific machine body 6, and this information may be allowed to be changed from the portable communication terminal 1 of the owner or a servicemember.

The short-range wireless communication system in the fourth embodiment includes the in-machine monitor 12 mounted in the machine body 6. The in-machine communication terminal 2 has the wireless communication enabled mode in which short-range wireless communication is in the on-state, the wireless communication stopped mode in which the short-range wireless communication is in the off-state and switchover of the short-range wireless communication state to the on-state is possible, and the wireless communication prohibited mode in which the short-range wireless communication is in the off-state and switchover of the short-range wireless communication state to the on-state is impossible. Switchover from the wireless communication enabled mode or the wireless communication stopped mode to the wireless communication prohibited mode is allowed by operation of the portable communication terminal or the in-machine monitor. However, switchover from the wireless communication prohibited mode to the wireless communication enabled mode or the wireless communication stopped mode is impossible with operation of the portable communication terminal or the in-machine monitor.

According to the fourth embodiment configured as above, the wireless communication prohibited mode is set in the in-machine communication terminal 2, and switchover from the wireless communication prohibited mode to the wireless communication enabled mode or the wireless communication stopped mode by operation of the portable communication terminal 1 or the in-machine monitor 12 is made impossible. This enables prevention of the short-range wireless communication from being used in violation of the latest laws and regulations due to carelessness of the worker 4.

### [Fifth Embodiment]

A fifth embodiment of the present invention will be described with focus on differences from the first embodiment. For example, because of a demand to absolutely avoid interference with IoT equipment to be used for construction with high accuracy, or the like, it is often desired to make short-range wireless communication unusable even in a region in which the short-range wireless communication is permitted. The fifth embodiment is made in view of this point.

The portable communication terminal 1, the in-machine communication terminal 2, and the management server 3 in the fifth embodiment each store a signal regarding whether to reject an attempt to use short-range wireless communication (wireless communication use rejection signal).

The wireless communication use rejection signal of the portable communication terminal 1 can be enabled by predetermined operation on the portable communication terminal 1. When operation to transmit the wireless communication turn-on request is executed in the state in which the wireless communication use rejection signal is enabled, the portable communication terminal 1 informs that it is impossible to transmit the wireless communication turn-on request on the terminal screen.

The wireless communication use rejection signal of the in-machine communication terminal 2 can be enabled by predetermined operation on the in-machine monitor 12 or the service tool 15. When receiving the wireless communication turn-on request in the state in which the wireless communication use rejection signal is enabled, the in-machine communication terminal 2 informs the portable communication terminal 1 that it is impossible to turn on the short-range wireless communication through the management server 3, without turning on the short-range wireless communication.

The wireless communication use rejection signal of the management server 3 can be enabled by predetermined operation on the management server operation terminal 16 formed of a personal computer or tablet. When receiving the wireless communication turn-on request in the state in which the wireless communication use rejection signal is enabled, the management server 3 informs the portable communication terminal 1 that it is impossible to turn on the short-range wireless communication, without determining whether wireless communication is possible or not.

The portable communication terminal 1 in the fifth embodiment stores a first signal (wireless communication use rejection signal) that can be enabled by predetermined operation, and informs that it is impossible to transmit the wireless communication turn-on request on the terminal screen, without transmitting the wireless communication turn-on request to the management server 3 when operation to transmit the wireless communication turn-on request is executed in the state in which the first signal is enabled. The in-machine communication terminal 2 stores a second signal (wireless communication use rejection signal) that can be enabled by predetermined operation on the in-machine monitor 12 or the service tool 15, and informs the portable communication terminal 1 through the management server 3 that it is impossible to turn on the short-range wireless communication, without turning on the short-range wireless communication when receiving the wireless communication turn-on request from the management server 3 in the state in which the second signal is enabled. The management server 3 stores a third signal (wireless communication use rejection signal) that can be enabled by predetermined operation, and informs the portable communication terminal 1 that it is impossible to turn on the short-range wireless communication, without transmitting the wireless communication turn-on request to the in-machine communication terminal 2 when receiving the wireless communication turn-on request from the portable communication terminal 1 in the state in which the third signal is enabled.

According to the fifth embodiment configured as above, by enabling any of the wireless communication use rejection signals stored by the portable communication terminal 1, the in-machine communication terminal 2, and the management server 3, the short-range wireless communication can be made unusable even in a region in which the short-range wireless communication is permitted.

Although the embodiments of the present invention have been described in detail above, the present invention is not limited to the above-described embodiments and various modifications are included therein. For example, the above-described embodiments have been explained in detail in order to explain the present invention in an easy-to-understand manner, and the present invention is not necessarily limited to that including all configurations explained. Furthermore, it is also possible to add part of a configuration of a certain embodiment to a configuration of another embodiment. It is also possible to delete part of a configuration of a certain embodiment or replace the part by part of another embodiment.

### Description of Reference Characters

1: Portable communication terminal
2: In-machine communication terminal
3: Management server
4: Worker
5: Communication network
6: Machine body
7: Machine body system
8: Permissive region determination section
9: Wireless communication possibility determination section
10: Wireless communication turn-on request transmitting section
11: Connection information transmitting section
12: In-machine monitor
13: Monitor controller
14: User interface
15: Service tool
16: Management server operation terminal
17: Storage section

## Claims

1. A short-range wireless communication system comprising:
an in-machine communication terminal (2) mounted in a machine body (6); and
a portable communication terminal (1) capable of connecting to the in-machine communication terminal (2) by a short-range wireless communication line, wherein
the short-range wireless communication system includes a management server (3) connected to the in-machine communication terminal (2) and the portable communication terminal (1) through a communication network (5),
the portable communication terminal (1) transmits a wireless communication turn-on request to the management server (3) in a case connecting to the in-machine communication terminal (2) by the short-range wireless communication line, and
the management server (3)
includes a storage section (17) that acquires and stores information on latest laws and regulations,
is configured to determine whether a current position of the machine body (6) received from the in-machine communication terminal (2) is included in a region in which short-range wireless communication is permitted, on a basis of the information on the latest laws and regulations stored in the storage section (17), in a case receiving the wireless communication turn-on request from the portable communication terminal (1),
transmits the wireless communication turn-on request to the in-machine communication terminal (2) in a case determining that the current position is included in a region in which the short-range wireless communication is permitted, and
keeps the wireless communication turn-on request from being transmitted to the in-machine communication terminal (2) in a case determining that the current position is not included in a region in which the short-range wireless communication is permitted.

2. The short-range wireless communication system according to claim 1, wherein
the in-machine communication terminal (2) periodically transmits position information of the machine body (6) to the management server (3),
the management server (3),
in a case receiving the wireless communication turn-on request from the portable communication terminal (1), transmits past position information that is the position information of the machine body (6) received last from the in-machine communication terminal (2) to the in-machine communication terminal (2) in a case in which the past position information is included in a region in which the short-range wireless communication is permitted, and
the in-machine communication terminal (2) is configured to turn on the short-range wireless communication in a case movement distance from the past position information to current position information of the machine body (6) is equal to or shorter than a predetermined threshold, and transmit the current position information to the management server (3) without turning on the short-range wireless communication in a case the movement distance exceeds the threshold.

3. The short-range wireless communication system according to claim 1, wherein
the short-range wireless communication system includes an in-machine monitor (12) mounted in the machine body (6), and
the in-machine monitor (12) displays an operation menu to be used for manually turning on the short-range wireless communication in a case the in-machine communication terminal (2) has sensed that it is impossible to use the communication network (5).

4. The short-range wireless communication system according to claim 1, wherein
the in-machine communication terminal (2) is configured to turn off the short-range wireless communication in a case the machine body (6) has moved by a certain distance after the short-range wireless communication has been turned on or in a case a certain time has elapsed after the short-range wireless communication has been turned on.

5. The short-range wireless communication system according to claim 1, wherein
the short-range wireless communication system includes an in-machine monitor (12) mounted in the machine body (6), and
the in-machine communication terminal (2)
has a wireless communication enabled mode in which the short-range wireless communication is enabled, a wireless communication stopped mode in which the short-range wireless communication is in an off-state and switchover of a short-range wireless communication state to an on-state is possible, and a wireless communication prohibited mode in which the short-range wireless communication is in an off-state and switchover of the short-range wireless communication state to an on-state is impossible,
switchover from the wireless communication enabled mode or the wireless communication stopped mode to the wireless communication prohibited mode is possible by operation of the portable communication terminal (1) or the in-machine monitor (12), and
switchover from the wireless communication prohibited mode to the wireless communication enabled mode or the wireless communication stopped mode is impossible with operation of the portable communication terminal (1) or the in-machine monitor (12).

6. The short-range wireless communication system according to claim 1, wherein
the portable communication terminal (1) stores a first signal allowed to be enabled by predetermined operation, and informs that it is impossible to transmit the wireless communication turn-on request on a terminal screen, without transmitting the wireless communication turn-on request to the management server (3) in a case operation to transmit the wireless communication turn-on request is executed in a state in which the first signal is enabled,
the in-machine communication terminal (2) stores a second signal allowed to be enabled by predetermined operation on an in-machine monitor (12) or a service tool (15), and informs the portable communication terminal (1) through the management server (3) that it is impossible to turn on the short-range wireless communication, without turning on wireless communication in a case receiving the wireless communication turn-on request from the management server (3) in a state in which the second signal is enabled, and
the management server (3) stores a third signal allowed to be enabled by predetermined operation, and informs the portable communication terminal (1) that it is impossible to turn on the short-range wireless communication, without transmitting the wireless communication turn-on request to the in-machine communication terminal (2) in a case receiving the wireless communication turn-on request from the portable communication terminal (1) in a state in which the third signal is enabled.

## Patentansprüche

1. Drahtloskommunikationssystem mit kurzer Reichweite, das Folgendes umfasst:
ein maschineninternes Kommunikationsendgerät (2), das in einem Maschinenkörper (6) angebracht ist; und
ein tragbares Kommunikationsendgerät (1), das sich über eine Strecke einer Drahtloskommunikation mit kurzer Reichweite mit dem maschineninternen Kommunikationsgerät (2) verbinden kann, wobei
das Drahtloskommunikationssystem mit kurzer Reichweite einen Managementserver (3) enthält, der über ein Kommunikationsnetz (5) mit dem maschineninternen Kommunikationsgerät (2) und dem tragbaren Kommunikationsendgerät (1) verbunden ist,
das tragbare Kommunikationsendgerät (1) eine Drahtloskommunikations-Einschaltanfrage an den Managementserver (3) überträgt, wenn es sich über die Strecke der Drahtloskommunikation mit kurzer Reichweite mit dem maschineninternen Kommunikationsgerät (2) verbindet, und
der Managementserver (3)
einen Speicherabschnitt (17) enthält, der Informationen über neueste Gesetze und Vorschriften erfasst und speichert,
konfiguriert ist, auf der Grundlage der Informationen über die neuesten Gesetze und Vorschriften, die im Speicherabschnitt (17) gespeichert sind, zu bestimmen, ob eine aktuelle Position des Maschinenkörpers (6), die vom maschineninternen Kommunikationsgerät (2) empfangen wird, in einem Bereich enthalten ist, in dem Drahtloskommunikation mit kurzer Reichweite erlaubt ist, wenn die Drahtloskommunikations-Einschaltanfrage vom tragbaren Kommunikationsendgerät (1) empfangen wird,
die Drahtloskommunikations-Einschaltanfrage an das maschineninterne Kommunikationsgerät (2) überträgt, wenn bestimmt wird, dass die aktuelle Position in einem Bereich enthalten ist, in dem die Drahtloskommunikation mit kurzer Reichweite erlaubt ist, und
verhindert, dass die Drahtloskommunikations-Einschaltanfrage an das maschineninterne Kommunikationsgerät (2) übertragen wird, wenn bestimmt wird, dass die aktuelle Position nicht in einem Bereich enthalten ist, in dem die Drahtloskommunikation mit kurzer Reichweite erlaubt ist.

2. Drahtloskommunikationssystem mit kurzer Reichweite nach Anspruch 1, wobei
das maschineninterne Kommunikationsgerät (2) periodisch Positionsinformationen des Maschinenkörpers (6) an den Managementserver (3) überträgt,
der Managementserver (3)
dann, wenn die Drahtloskommunikations-Einschaltanfrage vom tragbaren Kommunikationsendgerät (1) empfangen wird, vergangene Positionsinformationen, die die Positionsinformationen des Maschinenkörpers (6) sind, die zuletzt vom maschineninternen Kommunikationsgerät (2) empfangen worden sind, an das maschineninterne Kommunikationsgerät (2) überträgt, wenn die vergangenen Positionsinformationen in einem Bereich enthalten sind, in dem die Drahtloskommunikation mit kurzer Reichweite erlaubt ist, und
das maschineninterne Kommunikationsgerät (2) konfiguriert ist, die Drahtloskommunikation mit kurzer Reichweite einzuschalten, wenn eine Bewegungsentfernung von den vergangenen Positionsinformationen zu aktuellen Positionsinformationen des Maschinenkörpers (6) gleich einem vorgegebenen Schwellenwert oder kürzer als ein vorgegebener Schwellenwert ist, und die aktuellen Positionsinformationen an den Managementserver (3) zu übertragen, ohne die Drahtloskommunikation mit kurzer Reichweite einzuschalten, wenn die Bewegungsentfernung den Schwellenwert überschreitet.

3. Drahtloskommunikationssystem mit kurzer Reichweite nach Anspruch 1, wobei
das Drahtloskommunikationssystem mit kurzer Reichweite einen maschineninternen Bildschirm (12) enthält, der im Maschinenkörper (6) angebracht ist, und
der maschineninternen Bildschirm (12) ein Bedienungsmenü anzeigt, das zum manuellen Einschalten der Drahtloskommunikation mit kurzer Reichweite zu verwenden ist, wenn das maschineninternen Kommunikationsgerät (2) erfasst hat, dass es unmöglich ist, das Kommunikationsnetz (5) zu verwenden.

4. Drahtloskommunikationssystem mit kurzer Reichweite nach Anspruch 1, wobei
das maschineninternen Kommunikationsgerät (2) konfiguriert ist, die Drahtloskommunikation mit kurzer Reichweite auszuschalten, wenn sich der Maschinenkörper (6) um eine bestimmte Entfernung bewegt hat, nachdem die Drahtloskommunikation mit kurzer Reichweite eingeschaltet worden ist, oder wenn eine bestimmte Zeit verstrichen ist, nachdem die Drahtloskommunikation mit kurzer Reichweite eingeschaltet worden ist.

5. Drahtloskommunikationssystem mit kurzer Reichweite nach Anspruch 1, wobei
das Drahtloskommunikationssystem mit kurzer Reichweite einen maschineninternen Bildschirm (12) enthält, der im Maschinenkörper (6) angebracht ist, und
das maschineninterne Kommunikationsgerät (2)
eine Betriebsart mit aktivierter Drahtloskommunikation, in der die Drahtloskommunikation mit kurzer Reichweite aktiviert ist, eine Betriebsart mit angehaltener Drahtloskommunikation, in der sich die Drahtloskommunikation mit kurzer Reichweite in einem Aus-Zustand befindet und ein Umschalten eines Zustands der Drahtloskommunikation mit kurzer Reichweite in einen Ein-Zustand möglich ist, und eine Betriebsart mit verbotener Drahtloskommunikation, in der sich die Drahtloskommunikation mit kurzer Reichweite in einem Aus-Zustand befindet und ein Umschalten des Zustands der Drahtloskommunikation mit kurzer Reichweite in einen Ein-Zustand unmöglich ist, besitzt,
wobei das Umschalten von der Betriebsart mit aktivierter Drahtloskommunikation oder der Betriebsart mit angehaltener Drahtloskommunikation in die Betriebsart mit verbotener Drahtloskommunikation durch eine Bedienung des tragbaren Kommunikationsendgeräts (1) oder des maschineninternen Bildschirms (12) möglich ist, und
das Umschalten von der Betriebsart mit verbotener Drahtloskommunikation in die Betriebsart mit aktivierter Drahtloskommunikation oder die Betriebsart mit angehaltener Drahtloskommunikation mit einer Bedienung des tragbaren Kommunikationsendgeräts (1) oder des maschineninternen Bildschirms (12) unmöglich ist.

6. Drahtloskommunikationssystem mit kurzer Reichweite nach Anspruch 1, wobei
das tragbare Kommunikationsendgerät (1) ein erstes Signal, für das erlaubt ist, es durch eine vorgegebene Bedienung zu aktivieren, speichert und auf einem Endgerätbildschirm darüber informiert, dass es unmöglich ist, die Drahtloskommunikations-Einschaltanfrage zu übertragen, ohne die Drahtloskommunikations-Einschaltanfrage an den Managementserver (3) zu übertragen, wenn eine Bedienung, um die Drahtloskommunikations-Einschaltanfrage zu übertragen, in einem Zustand ausgeführt wird, in dem das erste Signal aktiviert ist,
das maschineninterne Kommunikationsgerät (2) ein zweites Signal, für das erlaubt ist, es durch eine vorgegebene Bedienung auf einem maschineninternen Bildschirm (12) oder einem Wartungswerkzeug (15) zu aktivieren, speichert und das tragbare Kommunikationsendgerät (1) durch den Managementserver (3) darüber informiert, dass es unmöglich ist, die Drahtloskommunikation mit kurzer Reichweite einzuschalten, ohne die Drahtloskommunikation einzuschalten, wenn die Drahtloskommunikations-Einschaltanfrage in einem Zustand, in dem das zweite Signal aktiviert ist, vom Managementserver (3) empfangen wird, und
der Managementserver (3) ein drittes Signal, für das erlaubt ist, es durch einen vorgegebenen Vorgang zu aktivieren, speichert und das tragbare Kommunikationsendgerät (1) darüber informiert, dass es unmöglich ist, die Drahtloskommunikation mit kurzer Reichweite einzuschalten, ohne die Drahtloskommunikations-Einschaltanfrage an das maschineninterne Kommunikationsgerät (2) zu übertragen, wenn die Drahtloskommunikations-Einschaltanfrage in einem Zustand, in dem das dritte Signal aktiviert ist, vom tragbaren Kommunikationsendgerät (1) empfangen wird.

## Revendications

1. Système de communication sans fil de courte portée comprenant :
un terminal de communication embarqué (2) monté dans un corps de machine (6) ; et
un terminal de communication portable (1) capable de connexion avec le terminal de communication embarqué (2) par l'intermédiaire d'une ligne de communication sans fil de courte portée, dans lequel
le système de communication sans fil de courte portée inclut un serveur de gestion (3) connecté au terminal de communication embarqué (2) et au terminal de communication portable (1) via un réseau de communication (5), le terminal de communication portable (1) transmet une requête d'activation de communication sans fil au serveur de gestion (3) dans un cas où il est connecté au terminal de communication embarqué (2) par l'intermédiaire de la ligne de communication sans fil de courte portée, et
le serveur de gestion (3)
inclut une section de stockage (17) qui acquiert et stocke des informations concernant les lois et régulations les plus récentes,
est configuré pour déterminer si une position actuelle du corps de machine (6) reçue depuis le terminal de communication embarqué (2) est incluse dans une région dans laquelle une communication sans fil de courte portée est autorisée, sur la base des informations concernant les lois et régulations les plus récentes stockées dans la section de stockage (17), dans un cas où il reçoit la requête d'activation de communication sans fil depuis le terminal de communication portable (1),
transmet la requête d'activation de communication sans fil au terminal de communication embarqué (2) dans un cas où il est déterminé que la position actuelle est incluse dans une région dans laquelle la communication sans fil de courte portée est autorisée, et
empêche la requête d'activation de communication sans fil d'être transmise au terminal de communication embarqué (2) dans un cas où il est déterminé que la position actuelle n'est pas incluse dans une région dans laquelle la communication sans fil de courte portée est autorisée.

2. Système de communication sans fil de courte portée selon la revendication 1, dans lequel
le terminal de communication embarqué (2) transmet périodiquement des informations de position du corps de machine (6) au serveur de gestion (3), le serveur de gestion (3),
dans un cas où il reçoit la requête d'activation de communication sans fil depuis le terminal de communication portable (1), transmet des informations de position passées, qui sont les informations de position du corps de machine (6) reçues en dernier depuis le terminal de communication embarqué (2), au terminal de communication embarqué (2) dans un cas où les informations de position passées sont incluses dans une région dans laquelle la communication sans fil de courte portée est autorisée, et
le terminal de communication embarqué (2) est configuré pour activer la communication sans fil de courte portée dans un cas où une distance de déplacement depuis les informations de position passées jusqu'aux informations de position actuelle du corps de machine (6) est égale ou inférieure à un seuil prédéterminé, et pour transmettre les informations de position actuelle au serveur de gestion (3) sans activer la communication sans fil de courte portée dans un cas où la distance de déplacement dépasse le seuil.

3. Système de communication sans fil de courte portée selon la revendication 1, dans lequel
le système de communication sans fil de courte portée inclut un dispositif de surveillance embarqué (12) monté dans le corps de machine (6), et
le dispositif de surveillance embarqué (12) affiche un menu d'actionnement il s'agit d'utiliser pour activer manuellement la communication sans fil de courte portée dans un cas où le terminal de communication embarqué (2) a détecté qu'il est impossible d'utiliser le réseau de communication (5).

4. Système de communication sans fil de courte portée selon la revendication 1, dans lequel
le terminal de communication embarqué (2) est configuré pour désactiver la communication sans fil de courte portée dans un cas où le corps de machine (6) s'est déplacé à raison d'une certaine distance après que la communication sans fil de courte portée a été activée ou dans un cas où un certain temps s'est écoulé après que la communication sans fil de courte portée a été activée.

5. Système de communication sans fil de courte portée selon la revendication 1, dans lequel
le système de communication sans fil de courte portée inclut un dispositif de surveillance embarqué (12) monté dans le corps de machine (6), et
le terminal de communication embarqué (2)
a un mode d'activation de communication sans fil dans lequel la communication sans fil de courte portée est activée, un mode d'arrêt de communication sans fil dans lequel la communication sans fil de courte portée est dans un état d'arrêt et où un basculement d'un état de communication sans fil de courte portée vers un état d'activation est possible, et un mode d'empêchement de communication sans fil dans lequel la communication sans fil de courte portée est dans un état d'arrêt et où un basculement de l'état de communication sans fil de courte portée vers un état d'activation est impossible,
un basculement depuis le mode d'activation de communication sans fil ou le mode d'arrêt de communication sans fil vers le mode d'empêchement de communication sans fil est possible par actionnement du terminal de communication portable (1) ou du dispositif de surveillance embarqué (12), et
un basculement depuis le mode d'empêchement de communication sans fil vers le mode d'activation de communication sans fil ou le mode d'arrêt de communication sans fil est impossible avec un actionnement du terminal de communication portable (1) ou du dispositif de surveillance embarqué (12).

6. Système de communication sans fil de courte portée selon la revendication 1, dans lequel
le terminal de communication portable (1) stocke un premier signal autorisé à être activé via un actionnement prédéterminé, et informe qu'il est impossible de transmettre la requête d'activation de communication sans fil sur un écran de terminal, sans transmettre la requête d'activation de communication sans fil au serveur de gestion (3) dans un cas où un actionnement pour transmettre la requête d'actionnement de communication sans fil est exécuté dans un état dans lequel le premier signal est activé,
le terminal de communication embarqué (2) stocke un deuxième signal autorisé à être activé via un actionnement prédéterminé sur un dispositif de surveillance embarqué (12) ou un outil de service (15), et informe le terminal de communication portable (1) via le serveur de gestion (3) qu'il est impossible d'activer la communication sans fil de courte portée, sans activer la communication sans fil dans un cas où il reçoit la requête d'activation de communication sans fil depuis le serveur de gestion (3) dans un état où le deuxième signal est activé, et
le serveur de gestion (3) stocke un troisième signal autorisé à être activé via un actionnement prédéterminé, et informe le terminal de communication portable (1) qu'il est impossible d'activer la communication sans fil de courte portée, sans transmettre la requête d'activation de communication sans fil au terminal de communication embarqué (2) dans un cas où il reçoit la requête d'activation de communication sans fil depuis le terminal de communication portable (1) dans un état dans lequel le troisième signal est activé.
